(19) Europäisches Patentamt
European Patent Office
Office européen des brevets

(11) Veröffentlichungsnummer: **0 409 821 B1**

(12) **EUROPÄISCHE PATENTSCHRIFT**

(45) Veröffentlichungstag der Patentschrift: **18.12.91**

(51) Int. Cl.5: **C25D 13/10**, C09D 5/44

(21) Anmeldenummer: **86905811.5**

(22) Anmeldetag: **13.10.86**

(86) Internationale Anmeldenummer:
**PCT/EP86/00585**

(87) Internationale Veröffentlichungsnummer:
**WO 87/02717 (07.05.87 87/10)**

(54) **ELEKTROPHORETISCH ÜBERBESCHICHTBARE IM ELEKTROTAUCHLACKIERVERFAHREN AUFGEBRACHTE ÜBERZÜGE.**

(30) Priorität: **31.10.85 DE 3538792**

(43) Veröffentlichungstag der Anmeldung:
**30.01.91 Patentblatt 91/05**

(45) Bekanntmachung des Hinweises auf die Patenterteilung:
**18.12.91 Patentblatt 91/51**

(84) Benannte Vertragsstaaten:
**AT BE CH DE FR GB IT LI NL SE**

(56) Entgegenhaltungen:
**DE-A- 3 508 146**

**See also references of WO8702717**

(73) Patentinhaber: **BASF Lacke + Farben Aktiengesellschaft**
**Max-Winkelmann-Strasse 80**
**W-4400 Münster(DE)**

(72) Erfinder: **BATZILL, Wolfgang**
**Emil-Nolde-Weg 93**
**W-4400 Münster(DE)**
Erfinder: **HEILMANN, Ulrich**
**Paul-Klee-Weg 7**
**W-4400 Münster(DE)**
Erfinder: **STREITBERGER, Hans, Joachim**
**Linckensstr. 21**
**W-4400 Münster(DE)**
Erfinder: **GUDER, Harald**
**Stefan-George-Str. 16**
**W-5600 Wuppertal 22(DE)**
Erfinder: **BECK, Fritz**
**Moltkestr. 66**
**W-4100 Duisburg 1(DE)**

**EP 0 409 821 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft kationische aminmodifizierte Epoxidharze enthaltende kathodisch abscheidbare mit elektrisch leitfähigem Ruß pigmentierte wäßrige Elektrotauchlacke, die nach der Abscheidung und Vernetzung elektrophoretisch überbeschichtbare Lackschichten liefern.

Die kathodische Elektrotauchlackierung ist ein sehr häufig angewandtes Lackierverfahren, bei dem wasserverdünnbare kathodische Gruppen tragende Kunstharze auf elektrisch leitende Körper aufgebracht werden.

Kationische aminmodifizierte Epoxidharze eignen sich besonders gut als Bindemittel für wäßrige kathodisch abscheidbare Elektrotauchlacke.

Bei der normalen Elektrotauchlackierung wird ein elektrisch isolierender nicht mehr elektrophoretisch überbeschichtbarer Überzug abgeschieden.

Um das technisch sehr vorteilhafte kathodische Elektrotauchlackierverfahren über die Grundierung hinaus auch bei der Herstellung von Mehrschichtüberzügen einsetzen zu können, ist versucht worden, elektrophoretisch überbeschichtbare Elektrotauchlackschichten durch Abscheidung von mit leitfähigen Rußen pigmentierten, wäßrigen Elektrotauchlacken zu erhalten (GB 2129807).

In der GB 2129807 werden 8 - 50 Gew. % fein verteilter Kohlenstoff - zum Beispiel Graphit oder Ruß mit einer Ölabsorption von 45 - 115 ml/100 g und einem Teilchendurchmesser von 15 - 85 $\mu$m - zu einem ein kationisches Kunstharz als Bindemittel enthaltenden kathodisch abscheidbaren wäßrigen Tauchlack gegeben.

Der Einsatz von Ruß in Elektrotauchlacken führt jedoch zu Störungen in den Öberflächen der abgeschiedenen Schichten (Rauhigkeit, Poren, Löcher...), die den Korrosionsschutz herabsetzen und das Aussehen sowie die physikalisch-chemischen Eigenschaften der elektrophoretisch aufgebrachten zweiten Schicht negativ beeinflussen.

Die durch die Beimengung der Rußpigmente hervorgerufenen Oberflächenstörungen nehmen bei fallender Rußkonzentration in ihrer Intensität und Häufigkeit ab.
Ein weiterer sehr wichtiger, bei der technischen Anwendung von rußpigmentierten Elektrotauchlacken zu beachtender Punkt ist die Sicherheit, mit der das Rußpigment appliziert werden kann. Ein hohes Maß an Applikationssicherheit ist dann gegeben, wenn auch bei größeren Rußkonzentrationsschwankungen elektrophoretisch überbeschichtbare Überzüge mit einem tolerierbaren Maß an Oberflächenstörungen erhalten werden.

Der Erfindung liegt die Aufgabe zugrunde, für kationische aminmodifizierte Epoxidharze enthaltende kathodisch abscheidbare mit elektrisch leitfähigem Ruß pigmentierte wäßrige Elektrotauchlacke, die nach der Abscheidung und Vernetzung elektrophoretisch überbeschichtbare Lackschichten liefern, Rußpigmente zu finden, die nicht nur in möglichst geringer Konzentration angewendet werden können, sondern auch ein hohes Maß an Applikationssicherheit gewährleisten.

Diese Aufgabe wurde erfindungsgemäß dadurch gelöst, daß als elektrisch leitfähiger Ruß ein Ruß in einer Menge von 1,5 - 5,1 Gew. % - bezogen auf den Gesamtfestkörper - eingesetzt wird, der eine Jodabsorption von 870 - 930 mg/g, eine spezifische Oberfläche (BET/$N_2$) von 850 - 1000 $m^2/g$, ein Porenvolumen (DBP) Von 330 - 390 ml/100 g und eine durchschnittliche Teilchengröße von 25 - 35 nm aufweist.

Die Erfindung betrifft auch ein Verfahren zum Herstellen eines Mehrschichtüberzuges, bei dem auf ein elektrisch leitendes Substrat ein ein kationisches aminmodifiziertes Epoxidharz enthaltender kathodisch abscheidbarer mit elektrisch leitfähigem Ruß pigmentierter wäßriger Elektrotauchlack elektrophoretisch aufgebracht, vernetzt und erneut elektrophoretisch überschichet wird, das sich dadurch auszeichnet, daß der zur Herstellung der Basisschicht verwendete Elektrotauchlack als elektrisch leitfähigen Ruß einen Ruß in einer Menge von 1,5 - 5,1 Gew. % - bezogen auf den Gesamtfestkörper - enthält, der folgende Analysendaten aufweist:

| | | Verwendete Testmethoden ASTM |
|---|---|---|
| Jodabsorption | 870-930 mg/g | D 1510-79 |
| Spez. Oberfläche ($BET/N_2$) | 850-1000 $m^2/g$ | D 3027-78 |
| Porenvolumen (DBP) | 330-390 ml/100 g | D 2414-79 |
| Durchschnittliche Teilchengröße | 25- 35 nm | |

Das Verfahren wird folgendermaßen durchgeführt:
Das zu überziehende elektrisch leitfähige Substrat wird in das wäßrige Elektrotauchlackbad eingetaucht und nach Anlegen einer elektrischen Spannung zwischen einer Anode und dem als Kathode geschalteten Substrat beschichtet.

Nach Beendigung der Abscheidung wird das Substrat dem Bad entnommen, die aufgebrachte Schicht abgespült und in bekannter Weise eingebrannt. Anschließend wird unter gleichen Bedingungen nochmals elektrophoretisch beschichtet und nachbehandelt.

Es können praktisch alle elektrisch leitenden Substrate nach dem erfindungsgemäßen Verfahren beschichtet werden. Üblicherweise handelt es sich dabei um Metallsubstrate, wie zum Beispiel Eisen, Stahl, Kupfer, Zink, Messing, Zinn, Nickel, Chrom und Aluminium, die phosphatiert, chromatiert oder anderweitig vorbehandelt sein können.

Die erfindungsgemäß eingesetzten Ruße zeichnen sich durch eine Jodabsorption von 870 - 930 mg/g, eine spezifische Oberfläche ($BET/N_2$) von 850 - 1000 $m^2/g$, ein Porenvolumen (DBP) von 330 - 390 ml/100 g und eine durchschnittliche Teilchengröße von 25 - 35 nm aus.
Als besonders geeignet hat sich ein Ruß mit einer Jodabsorption von 900 mg/g, einer spezifischen Oberfläche ($BET/N_2$) von 950 $m^2/g$, einem Porenvolumen (DBP) von 360 ml/100 g und einer durchschnittlichen Teilchengröße von 30 nm herausgestellt.

Ein solcher Ruß wird von der Akzo Chemie unter dem Warenzeichen KETJENBLACK EC vertrieben. In der zu diesem Produkt herausgegebenen Broschüre wird darauf hingewiesen, daß KETJENBLACK EC zur Erhöhung der Leitfähigkeit von Polymermischungen wie Kunststoff- und Kautschukmischungen einsetzbar ist und daß zur Erreichung einer bestimmten Leitfähigkeit nur ein Drittel oder ein Viertel der Menge KETJENBLACK EC benötigt wird, die bei Verwendung anderer elektrisch leitfähiger Ruße erforderlich wäre.

Die Firmenschrift gibt aber keinerlei Hinweise darauf, daß KETJENBLACK EC in wäßrigen Elektrotauchlacken anwendbar ist, und es ist überraschend, daß dieser Ruß in kationische aminmodifizierte Epoxidharze enthaltenden mit elektrisch leitfähigem Ruß pigmentierten kathodisch abscheidbaren wäßrigen Elektrotauchlacken, die nach der Abscheidung und Vernetzung elektrophoretisch überbeschichtbare Lackschichten liefern sollen, in sehr geringer Konzentration eingesetzt werden kann und zugleich ein hohes Maß an Applikationssicherheit gewährleistet.

Die erfindungsgemäßen Elektrotauchlacke liefern Lackschichten, die sowohl nach dem anodischen als auch nach dem kathodischen Elektrotauchlackierverfahren elektrophoretisch überschichtbar sind.
Wenn für die Überbeschichtungen die erfindungsgemäß pigmentierten Elektrotauchlacke verwendet werden, dann ist auch der Aufbau von Überzügen möglich, die aus mehr als zwei Schichten bestehen.
Elektrotauchlacke, die weniger als 1,5 Gew.-% - bezogen auf den Gesamtfestkörper - der erfindungsgemäßen Ruße enthalten, liefern Lackschichten, die nicht mehr mit einer geschlossenen zweiten Schicht elektrophoretisch überschichtet werden können.

Liegt die Rußkonzentration über 5,1 Gew. %, dann werden Lackschichten mit nicht mehr tolerierbaren Oberflächenstörungen erhalten (Warzenbildung).

Die als Bindemittel eingesetzten kationischen aminmodifizierten Epoxidharze sind Reaktionsprodukte aus

(A) Polyepoxiden

(B) primären und/oder sekundären Aminen bzw. deren Salzen und/oder Salzen von tertiären Aminen und ggfs.

(C) polyfunktionellen Alkoholen, Polycarbonsäuren, Polyaminen oder Polysulfiden.

Nach Neutralisierung mit einer Säure werden wasserdispergierbare Produkte erhalten.

Als Komponente A sind alle Verbindungen geeignet, die zwei oder mehr Epoxidgruppen im Molekül

enthalten. Bevorzugt sind solche Verbindungen, die zwei Epoxidgruppen im Molekül enthalten und ein relativ niedriges Molekulargewicht von höchstens 750, bevorzugt 400 - 500 haben.

Besonders bevorzugte Epoxidverbindungen sind aus Polyphenolen und Epihalohydrinen hergestellte Polyglycidylether von Polyphenolen. Als Polyphenole können zum Beispiel ganz besonders bevorzugt Bisphenol A und Bisphenol F und besonders bevorzugt 1,1-Bis-(4-hydroxyphenyl)n-heptan eingesetzt werden.

Außerdem sind auch 4,4' Dihydroxybenzophenon, Bis-(4-hydroxyphenyl)-1,1-ethan, Bis-(4-hydroxyphenyl) 1,1-isobutan, Bis (4-hydroxy-tertiär-butylphenyl)-2,2-propan, Bis-(2-hydroxynaphtyl)methan, 1,5 Dihydroxynaphtalin und phenolische Novolakharze geeignet.

Bevorzugte Epoxidverbindungen sind auch Polyglycidylether von mehrwertigen Alkoholen wie z.B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl)-2,2-propan.

Es können auch Polyglycidylester von Polycarbonsäuren, wie zum Beispiel Oxalsäure, Bernsteinsäure, Glutarsäure, Terephthalsäure, 2,6-Naphtalindicarbonsäure, dimerisierter Linolensäure, eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten alicyclischen Verbindung erhält.

Als Komponente B können primäre und/oder sekundäre Amine bzw. deren Salze und/oder Salze von tertiären Aminen verwendet werden, wobei die sekundären Amine besonders bevorzugte Komponenten B sind.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin und dergleichen. Geeignet sind ebenfalls Alkanolamine wie zum Beispiel Methylethanolamin, Diethanolamin und dergleichen. Ferner sind Dialkylaminoalkylamine wie zum Beispiel Dimethylaminoethylamin, Diethylaminopropylamin, Dimethylaminopropylamin und dergleichen geeignet. In den meisten Fällen werden niedermolekulare Amine verwendet, doch ist es auch möglich, höhermolekulare Monoamine anzuwenden.

Polyamine mit primären und sekundären Aminogruppen können in Form ihrer Ketimine mit dem Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxygruppe nicht stören und auch nicht zu einer Gelierung der Reaktionsmischung führen.

Die für die Wasserverdünnbarkeit und elektrische Abscheidung erforderlichen Ladungen können durch Protonisierung mit wasserlöslichen Säuren (z.B. Borsäure, Ameisensäure, Milchsäure, Propionsäure, Buttersäure, Salzsäure, Phosphorsäure, Schwefelsäure, Kohlensäure, bevorzugt Essigsäure) oder auch durch Umsetzung der Oxirangruppen mit Salzen eines Amins erzeugt werden.

Als Salz eines Amins kann das Salz eines tertiären Amins verwendet werden.

Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren soll. Bevorzugte Amine sind tertiäre Amine, wie Dimethylethanolamin, Triethylamin, Trimethylamin, Triisopropylamin und dergleichen. Beispiel von anderen geeigneten Aminen sind in der US-PS 3 839 252 in Spalte 5, Zeile 3 bis Spalte 7, Zeile 42 angegeben.

Als Komponente C werden polyfunktionelle Alkohole, Polycarbonsäuren, Polyamine oder Polysulfide bzw. Gemische aus Verbindungen dieser Stoffklassen eingesetzt.

Die in Betracht kommenden Polyole schließen Diole, Triole und höhere polymere Polyole, wie Polyesterpolyole, Polyetherpolyole ein.

Für die Komponente C geeignete Polyalkylenetherpolyole entsprechen der allgemeinen Formel:

$$H - \left[ O - (CHR)_n \right]_m - OH$$

in der R = Wasserstoff oder ein niedriger Alkylrest, gegebenenfalls mit verschiedenen Substituenten, ist, n = 2 bis 6 und m = 3 bis 50 oder noch höher ist. Beispiele sind Poly(oxytetramethylen)glykole und Poly-(oxyethylen)glykole.

Die bevorzugten Polyalkylenetherpolyole sind Poly (oxytetramethylen)glykole mit einem Molekulargewicht im Bereich von 350 bis 1 000.

Polyesterpolyole können ebenfalls als polymere Polyolkomponente verwendet werden. Man kann die Polyesterpolyole durch Polyveresterung von organischen Polycarbonatsäuren oder ihren Anhydriden mit organischen Polyolen, die primäre Hydroxylgruppen enthalten, herstellen. Üblicherweise sind die Polycarbonsäuren und die Polyole aliphatische oder aromatische Dicarbonsäuren und Diole.

Die zur Herstellung der Polyester verwendeten Diole schließen Alkylenglykole wie Ethylenglykol, Butylenglykol, Neopentylglykol und andere Glykole wie Cyclohexandimethanol ein.

Die Säurekomponente des Polyesters besteht in erster Linie aus niedermolekularen Carbonsäuren oder ihren Anhydriden mit 2 bis 18 Kohlenstoffatomen im Molekül. Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure, Maleinsäure und Glutarsäure. Anstelle dieser Säuren können auch ihre Anhydride, soweit diese existieren, verwendet werden.

Ferner lassen sich auch Polyesterpolyole, die sich von Lactonen ableiten, als Komponente (C) benutzen. Diese Produkte erhält man durch die Umsetzung eines $\epsilon$ -Caprolactons mit einem Polyol. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel

$$-\overset{\overset{O}{\|}}{C}-(CHR)_n-CH_2O-$$

entsprechen, in der n mindestens 4,
bevorzugt 4 bis 6, ist und der Substituent Wasserstoff, ein Alkylrest, ein Cycloalkylrest oder ein Alkoxyrest ist.

Als Komponente C werden auch aliphatische und/oder alicyclische polyfunktionelle Alkohole oder Carbonsäuren mit einem Molekulargewicht unter 350 eingesetzt. Vorteilhaft weisen diese eine verzweigte aliphatische Kette, insbesondere mit mindestens einer Neostruktur, auf.

Geeignete Verbindungen entsprechen der folgenden allgemeinen Formel:

$$Y-X-\left[\underset{R^2}{\overset{R^1}{C}}-(CH_2)_l-\left\{\underset{R^3}{CH}-(CH_2)_m\right\}_b\right]_a-Y$$

Hierin bedeuten

| | | |
|---|---|---|
| Y | = | OH, COOH |
| X | = | $(CH_2)n$ |

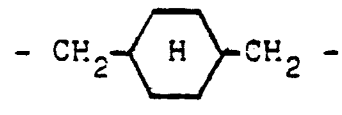

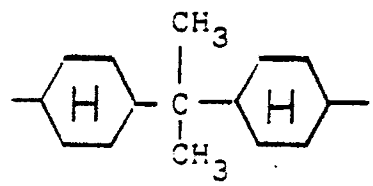

| | |
|---|---|
| $R^1$, $R^2$, $R^3$ | = H, Alkylrest mit 1 bis 6 C-Atomen |
| a | = 0;1 |
| b | = 0;1 |
| l | = 0 - 10 |
| m,n | = 1 - 10 |

Als Beispiele seien genannt:

Diole, wie Ethylenglykol, Diglykol, Dipropylenglykol, Dibutylenglykol, Triglykol, 1,2-Propandiol, 1,3-Propandiol, 2,2-Dimethyl-1,3-propandiol, 2,2-Diethyl- 1,3-propandiol, 2-Methyl-2-ethyl-1,3-propandiol, 2-Methyl-2-propyl-1,3-propandiol, 2-Ethyl-2-butyl-1,3-propandiol,1,2-Butandiol, 1,4-Butandiol, 2,3-Butandiol, 2-Ethyl-1,4-butandiol, 2,2-Diethyl-1,3-butandiol, Buten-2-diol-1,4, 1,2-Pentandiol, 1,5-Pentandiol, 3-Methyl-1,5-pentandiol, 1,6-Hexandiol, 2,5-Hexandiol, 2-Ethyl-1,3-hexandiol, 2,5-Dimethyl-2,5-hexandiol, 1,3-Octandiol, 4,5-Nonandiol, 2,10-Decandiol, 2-Hydroxyethylhydroxyacetat, 2,2-Dimethyl-3-hydroxypropyl-2,2-dimethylhydroxypropionat, 2-Methyl-2-propyl-3-hydroxypropyl-2-methyl-2-propylhydroxypropionat, 4,4'-Methylenbiscyclohexanol und 4,4'-Isopropylidenbiscyclohexanol. Einige bevorzugte Diole sind 2,2-Dimethyl-1,3-propandiol, 3-Methyl-1,5-pentandiol, 2,2-Dimethyl-3-hydroxypropyl-2,2-dimethylhydroxypropionat und 4,4'-Isopropylidenbiscyclohexanol.

Als Carbonsäuren kommen eine Vielzahl von Dicarbonsäuren in Betracht, wie Oxalsäure, Malonsäure, 2,2-Dimethylmalonsäure, Bernsteinsäure, Glutarsäure, Adipinsäure, Hexahydrophthalsäure, Maleinsäure, Fumarsäure, Pimelinsäure, Korksäure, Azelainsäure, Sebazinsäure, Itakonsäure, Citrakonsäure, Mesakonsäure und Glutakonsäure.

Bevorzugt eingesetzte Dicarbonsäuren sind z.B. 2,2-Dimethylmalonsäure und Hexahydrophthalsäure.

Es können auch langkettige Dicarbonsäuren als Komponente C eingesetzt werden. Beispiele hierfür sind Dimerfettsäuren, wie etwa die dimere Linolsäure.

Geeignete Polyamine zur Elastifizierung kann man z.B. durch Umsetzung von primären Diaminen und Monoepoxiden darstellen. Die gebildeten sekundären, substituierten Diamine modifizieren die Epoxidharze in geeigneter Weise.

Als Komponente C können auch primär-tertiäre Diamine oder Alkanolamine wie Aminoethanol oder Aminopropanol verwendet werden.

Als polyfunktionelle SH-Verbindungen kommen Umsetzungsprodukte von organischen Dihalogeniden mit Natriumpolysulfid in Betracht. Weitere SH-Verbindungen sind z.B. Umsetzungsprodukte von hydroxylgruppenhaltigen linearen Polyestern, Polyethern oder Polyurethanen mit Mercaptocarbonsäuren wie Mercaptoessigsäure, 2-Mercaptopropionsäure, 3-Mercaptopropionsäure, Mercaptobuttersäure und ähnliche.

Als Komponente C geeignete Polyphenole entsprechen der allgemeinen Formel (I)

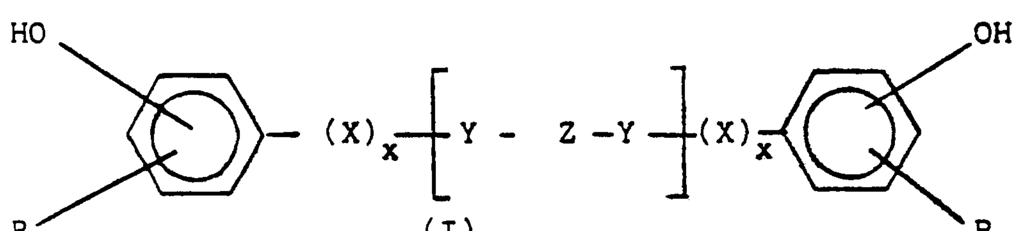

(I)

in der bedeuten

X = Alkylen, Arylen, Alkarylen
O, O-Alkylen, O-Arylen, O-Alkarylen
S, S-Alkylen, S-Arylen, S-Alkarylen
CO, CO-Alkylen, CO-Arylen, CO-Alkarylen
NH, NH-Alkylen, NH-Arylen, NH-Alkarylen
x = 0 oder 1

$$Y = X,\ -\overset{\overset{O}{\|}}{C}-O-,\ -O-,\ -\overset{\overset{H}{|}}{C}=N-,\ -\overset{\overset{H}{|}}{N}-\overset{\overset{O}{\|}}{C}-$$

Z = Alkylen, Alkylenrest auf Basis von Polyestern, Polyethern, Polyamiden, Polycarbonaten, Polyurethanen
R = H, $CH_3$, Alkyl-, -O -$CH_3$,-O-Alkyl, -$NO_2$, $NR'_2$', -NR' R", -NHCOR'"

Schließlich kann die Komponente (C) auch aus nach allgemein bekannten Methoden hergestellten Polyurethanen bestehen.

Die erfindungsgemäß verwendeten Bindemittel können nach an sich bekannten Methoden durch Zusatz von Vernetzungsmitteln vernetzt bzw. durch chemische Modifikation in selbstvernetzende Systeme überführt werden. Ein selbstvernetzdendes System kann zum Beispiel dadurch erhalten werden, daß das Bindemittel mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird. Als Vernetzungsmittel eignen sich praktisch alle mit Oxirangruppen reagierende, mindestens bifunktionelle Verbindungen wie zum Beispiel Polyalkohole, Polyphenole, Polycarbonsäuren, Polycarbonsäureanhydride und -amide, Polyamine, Polyisocyanate, Phenolplaste.

Die Vernetzungsmittel werden in der Regel in einer Menge von 5 bis 60, bevorzugt 20 bis 40 Gew.-% bezogen auf das Bindemittel eingesetzt.

Häufig angewandte Methoden zur Vernetzung von Bindemitteln sind zum Beispiel in folgenden Patentdokumenten publiziert: GB 13,03 480, europäische Patentanmeldung 12 463, US-PS 4, 252, 703 und GB 15 57 516.

Beispiele für geeignete Aminoplastvernetzungsmittel sind der Hexamethylether von Hexamethylolmelamin, der Triethyltrimethylether von Hexamethylolmelamin, der Hexabutylether von Hexamethylolmelamin und der Hexamethylether von Hexamethylolmelamin und polymere butylierte Melaminformaldehydharze. Ebenso verwendbar sind alkylierte Harnstofformaldehydharze. Als Vernetzungsmittel werden bevorzugt blockierte Polyisocyanate eingesetzt. Es können bei den erfindungsgemäß eingesetzten Bindemitteln beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhten Temperaturen, in der Regel im Bereich von etwa 90 bis etwa 300 °C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis 36, insbesondere etwa 8 bis etwa 15 Kohlenstoffatome enthalten. Beispiele geeigneter Diisocyanate sind Trimethylendiisocyanat, Tetramethylendiisocyanat, Pentamethylendiisocyanat, Hexamethylendiisocyanat, Propylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4-Diphenylendiisocyanat, 1,5-Naphthylendiisocyanat, 1,4-Naphthylendiisocyanat, 1-Isocyanatomethyl-5-isocyanato-1,3,3-trimethylcyclohexan, bis(4-Isocaynatocyclohexyl)methan, bis (4-Isocyanatophenyl)methan, 4,4'-Diisocyanatodiphenylether und 2,3-bis-(8-Isocyanatooctyl)-4-octyl-5-hexylcyclohexan. Es können auch Polyisocyanate von höherer Isocyanatfunktionalität verwendet werden. Beispiele dafür sind tris(4-Isocyanatophenyl)methan, 1,3,5-Triisocyanatobenzol, 2,4,6-Triisocyanatotoluol, 1,3,5-tris(6-Isocyanatohexylbiuret), bis (2,5-Diisocyanato-4-methylphenyl)methan, und polymere Polyisocyanate, wie Dimere und Trimere von Diisocyanatotoluol. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; cycloaliphatische Alkohole wie Cyclopentanol und Cyclohexanol; aromatische Alkylalkohole,

wie Phenylcarbinol und Methylphenylcarbinol.

Andere geeignete Blockierungsmittel sind Hydroxylamine wie Ethanolamin, Oxime wie Methylethylketonoxim, Acetonoxim und Cyclohexanonoxim oder Amine wie Dibutylamin und Diisopropylamin. Die genannten Polyisocyanate und Blockierungsmittel können bei geeigneten Mengenverhältnissen auch zur Herstellung der oben beschriebenen teilblockierten Polyisocyanate verwendet werden.

Für die vorliegende Erfindung bevorzugt einsetzbare Bindemittel sind in der DE-PS-2701002 offenbart, auf deren Inhalt hier Bezug genommen wird.

Den erfindungsgemäßen wäßrigen Überzugszusammensetzungen können allgemein übliche Zusätze wie zum Beispiel koaleszierende Lösungsmittel, Pigmente, oberflächenaktive Mittel, Vernetzungskatalysatoren, Antioxidantien, Füllstoffe und Antischaummittel zugegeben werden.

Die Erfindung wird in den folgenden Beispielen noch näher erläutert. Alle Angaben über Teile und Prozentsätze sind Gewichtsangaben, falls nicht ausdrücklich etwas anderes festgestellt wird.

Herstellung eines Polyurethanvernetzers für das Bindemittel C (nach Beispiel 1 der DE-PS 2701002)

In einem Reaktor wurde ein Polyurethanvernetzer hergestellt, indem 218 Gewichtsteile 2-Äthylhexanol langsam zu 291 Gewischtsteilen einer 80/20 Isomermischung von 2,4-/2,6-Toluoldiisocyanat unter Rühren und in einer Stickstoffatmosphäre gegeben wurden, wobei die Reaktionstemperatur durch äußere Kühlung unter 38 °C gehalten wurde. Der Ansatz wurde noch eine weitere halbe Stunde bei 38 °C gehalten und dann auf 60 °C erwärmt, wonach 75 Gewichtsteile Trimethylolpropan und anschließend 0,08 Teile Dibutylzinndilaurat als Katalysator zugegeben wurden. Nach einer exothermen Reaktion zu Beginn wurde der Ansatz 1,5 Stunden bei 121 °C gehalten, bis im wesentlichen die gesamten Isocyanatgruppen verbraucht waren, was an dem Infrarotspektrum zu erkennen war. Der Ansatz wurde dann mit 249 Teilen Ethylenglykolmonoethylether verdünnt.

Herstellung eines Bindemittelkonzentrates des Bindemittels C (nach Beispiel 6 der DE-PS-2701002)

In einem geeigneten Reaktor wurden 882,9 Teile eines handelsüblichen Polyglycidylethers eines Polyhenols mit einem Epoxyäquivalent von 465, 251,8 Teile Poly(neopentylglycoladipat) mit einem Molekulargewicht von 530 und 69,9 Teile Xylol gegeben. Der Ansatz wurde unter einer Stickstoffatmosphäre für etwa 20 Minuten unter Rückflußkünlung zum Sieden erwärmt, wobei das Wasser aus der azeotropen Mischung entfernt wurde. Nach dem Kühlen auf 130 °C wurden 3,2 Teile Benzyldimethylamin zugegeben, und der Ansatz wurde 2 Stunden und 20 Minuten bei 130 °C gehalten. Dann wurden 862 Teile des Polyurethanvernetzers zugegeben. Die Umsetzungstemperatur wurde auf 90 °C gesenkt, und es wurden 73,8 Teile einer Lösung mit 73 % nicht flüchtigen Anteilen des Methylisobutyldiketimins von Diethylentriamin in Methylisobutylketon zugegeben. Anschließend wurden 56,1 Teile N-Methylethanolamin zugegeben, und der Ansatz wurde auf 110 °C erwärmt. Nachdem diese Temperatur etwa 1 Stunde gehalten worden war, wurden 90,4 Teile Ethylenglycolmonohexylether zugegeben.

Anschließend wurde mit Methylisobutylketon und Ethylglykol auf einen Festkörper von 65 % verdünnt.

Katalysatorpaste für Bindemittel C (nach Beispiel 6 der DE-PS 2701002)

Die verwendete Katalysatorpaste wurde aus folgendem Ansatz hergestellt:

| Bestandteile | Gewichtsteile |
|---|---|
| vorstehendes Bindemittelkonzentrat | 201,5 |
| entionisiertes Wasser | 460,3 |
| Dibutylzinnoxid | 283,7 |

Diese Bestandteile wurden gemischt und in einer geeigneten Mühle auf eine Feinheit Nr. 7 nach Hegman zerkleinert.

Verwendete Ruße

Zur Pigmentierung wurden 5 verschiedene Ruße eingesetzt. Ihre wichtigsten Eigenschaften sind in folgender Tabelle zusammengefaßt:

$R_1$ ist ein Farbruß; bei den übrigen 4 Rußsorten handelt es sich um ausgesprochene Leitruße.

| Ruß | Hersteller | Teilchendurchmesser/ nm | BET-Oberfläche $m^2g^{-1}$ | DBP-Adsorption/ ml / 100 g |
|---|---|---|---|---|
| $R_1$ (Raven 410) | Columbian | 70 | 28 | 70 |
| $R_2$ (Corax L) | Degussa | 23 | 150 | 123 |
| $R_3$ (Corax L6) | Degussa | 18 | 265 | 136 |
| $R_4$ (Conductex 40-220) | Columbian | 16 | 1075 | 228 |
| $R_5$ (Ketjen Black EC) | AKZO | 30 | 950 | 360 |

Herstellung rußpigmentierter Konzentrate

Die Einarbeitung der Ruße in die Bindemittel erfolgte mit einem Dissolver.

Dazu wurden Bindemittelkonzentrat, Ruß und Neutralisationsmittel in eine drei Liter Weißblechdose eingewogen. Durch Zugabe von zusätzlichen, konzentrateigenen organischen Lösungemitteln wurde die Viskosität der Mischung so eingestellt, daß der Dissolver den Ansatz bewegen konnte.

Der Mahlvorgang erfolgt dann bei 3.500 U/min. solange, bis der Ansatz keine Partikel mehr enthielt, die gröber als 5 $\mu m$ waren (Grindometer nach Hegman). Die so erhaltenen rußpigmentierten und partiell neutralisierten Konzentrate sind einige Monate lagerfähig und können dann mühelos zu Elektrotauchlackbädern verdünnt werden.

Einstellung der Elektrotauchlackbäder

Die Herstellung der Elektrotauchlackbäder erfolgte durch Zusammenrührung von rußpigmentiertem Konzentrat, zusätzlichem Bindemittel, Neutralisationsmittel und organischen Lösungsmitteln mit einem V2A-Flügelrührer. Anschließend wurde mit destilliertem Wasser verdünnt.

Die jeweiligen Mengen wurden so berechnet, daß die Tauchlackbäder innerhalb einer Rußkonzentrationsreihe immer mengenmäßig gleiche Anteile an Bindemittel, Lösungsmittel, Neutralisationsmittel und Wasser enthielten. Sie unterschieden sich nur in ihrem Ruß und damit auch dem Festkörperanteil.

Die Zusammensetzung der Bäder ist in folgender Tabelle für den üblichen 3 1-Ansatz zusammengefaßt. Dort sind auch Angaben über die eingestellten Neutralisationsgrade $\alpha$ gemacht. Die Lösungsmittelmengen beziehen sich auf die primäre Einwaage. Die jeweiligen Rußgehalte der Bäder wurden entweder durch Neuansatz oder durch Zusammenwiegen entsprechender Mengen hoch- und niedrigpigmentierter Bäder eingestellt.

Die Bäder enthalten noch größere Mengen organische Lösungsmittel, die zur Einarbeitung und Benetzung des Rußes notwendig waren, die Abscheidung jedoch stören.

Deshalb wurden die Bäder vor ihrem Einsatz einige Zeit bei erhöhter Temperatur ausgerührt. Dabei treten ein Verlust von Lösungsmitteln, der durch destilliertes Wasser ersetzt wird, und eine Alterung des Bades ein.

| Bindemittel | Rußsorte | $m_{BM}/g$ | $m_{H_2O}/g$ | $m_{Lsgm}/g$ | $m_R/g$ | FK / % | Ruß im FK / % | $\alpha$ / % |
|---|---|---|---|---|---|---|---|---|
| A | $R_1$ | 213,3 | 2285,1 | 415,0 | 0-68,8 | 7,9-10,0 | 0-22,9 | 143 |
| A | $R_2$ | 213,3 | 2285,1 | 415,0 | 0-68,8 | 7,9-10,0 | 0-22,9 | 143 |
| A | $R_3$ | 213,3 | 2285,1 | 415,0 | 0-68,8 | 7,9-10,0 | 0-22,9 | 143 |
| A | $R_4$ | 213,3 | 2285,1 | 415,0 | 0-31,3 | 7,9- 8,9 | 0-11,9 | 143 |
| A | $R_5$ | 213,3 | 2285,1 | 415,0 | 0-31,3 | 7,9- 8,9 | 0-11,9 | 143 |
| C | $R_1$ | 435,4 | 2075,1 | 297,2 | 0-104,7 | 15,0-18,0 | 0-19,4 | 50 |
| C | $R_2$ | 435,4 | 2075,1 | 297,2 | 0-104,7 | 15,0-18,0 | 0-19,4 | 50 |
| C | $R_3$ | 435,4 | 2075,1 | 297,2 | 0-104,7 | 15,0-18,0 | 0-19,4 | 50 |
| C | $R_4$ | 435,4 | 2055,0 | 363,4 | 0-58,6 | 15,0-16,5 | 0-11,9 | 50 |
| C | $R_5$ | 435,4 | 2055,0 | 363,4 | 0-58,6 | 15,0-16,5 | 0-11,9 | 50 |

Zusammensetzung der Bäder

BM = Bindemittel
R = Ruß
FK = Festkörper

m = Masse
g = Gramm
Lsgm= Lösungsmittel

Abscheidungen

Die Abscheidungen wurden üblicherweise auf Stahlblechen ST 1203 von 130 x 45 x 1 mm durchgeführt.

Die Stahlbleche wurden wie folgt vorbereitet:
a) Entfetten in Petroläther 40 - 60 °C
b) Entrosten mit einer Stahlbürste
c) Reinigung mit Scheuerpulver
d) Abspülen mit destilliertem Wasser
e) Abspülen mit Aceton
f) Trocknen bei 60 °C

Einige Beschichtungen wurden auf phosphatiertem Stahlblech (Bonder 120, Metallgesellschaft) derselben Dimensionen durchgeführt.

Die Beschichtung der Stahlbleche wurde bei konstanter Spannung durchgeführt.

Dabei wurde die gesamte Spannung unmittelbar mit dem Einschalten auf das System gegeben. Die Abscheidespannung betrug bei Bindemittel C 300 V und bei Bindemittel A 150 V.

Nach Abschalten des Stromes wurden die beschichteten Proben so schnell wie möglich aus dem Bad entfernt und mit einem scharfen Wasserstrahl von anhaftendem Lackbad befreit. Anschließend wurde mit destilliertem Wasser gespült und mit Luft trocken geblasen.

Die Einbrennzeit betrug 20 Minuten. Die Einbrenntemperaturen lagen bei 170 - 180 °C.

Bindemittel A

Als Bindemittel A wurde das bei der BASF AG erhältliche Harz Luhydran E33, bei dem es sich um ein über Methylolethergruppen vernetzendes anodisch abscheidbares Polyacrylatharz handelt, eingesetzt (Lieferform: 70 %ig in Isanol, Säurezahl 37, Neutralisationsmittel: Dimethylethanolamin).

Auswertung der experimentellen Ergebnisse

Folgende Tabelle zeigt für das Bindemittelsystem C die für die Abscheidung einer geschlossenen zweiten Schicht mindestens notwendige Rußpigmentkonzentration.

Zum Vergleich wurden entsprechende Messungen am Bindemittelsystem A durchgeführt.

| Bindemittel | Pigment | $c_{GS}$/Gew. % |
|---|---|---|
| C | $R_1$ | > 19,4 |
| C | $R_2$ | 9,8 |
| C | $R_3$ | 7,5 |
| C | $R_4$ | 7,5 |
| C | $R_5$ | 1,5 |
| A | $R_1$ | 9,8 |
| A | $R_2$ | 4,4 |
| A | $R_3$ | 4,0 |
| A | $R_4$ | 4,0 |
| A | $R_5$ | 4,4 |

$c_{GS}$ = Grenzkonzentration der Abscheidung einer geschlossenen zweiten Schicht

Obige Tabelle zeigt signifikante Unterschiede zwischen den beiden Bindemittelsystemen C und A. Während System C bei Füllung mit $R_5$ schon bei extrem niedrigen Rußkonzentrationen elektrophoretisch überlackierbare Schichten liefert, nehmen im System A die mit $R_5$ gefüllten Proben keine Sonderstellung ein; hier kann - unabhängig von der verwendeten Rußsorte - oberhalb einer Füllung von 4,0 Gew. % überlackiert werden.

Bei stetiger Erhöhung der Rußfüllung gelangt man in einen Bereich, in dem die Oberflächenstörungen ein tolerierbares Maß überschreiten.
Es wachsen warzenartige Gebilde auf. Die Warzenbildung zeigt an, daß an diesen Stellen bereits im Naßfilm eine durchgehende elektronische Leitfähigkeit besteht.

In der folgenden Tabelle sind die Rußpigmentkonzentrationen ($c_W$) angegeben, ab denen im Bindemittel C Warzen identifiziert werden konnten.

| Bindemittel | Pigmentierung | $c_W$/Gew.% |
|---|---|---|
| C | $R_1$ | 30,0 |
| C | $R_2$ | 17,8 |
| C | $R_3$ | 15,9 |
| C | $R_4$ | 11,9 |
| C | $R_5$ | 5,1 |

$c_W$ = Grenzkonzentration der Warzenbildung

Da eine exakte Steuerung der Rußpigmentkonzentration im Elektrotauchbad und in der abgeschiedenen Lackschicht in der technischen Praxis Probleme mit sich bringt, sollte das eingesetzte Rußpigment ein hohes Maß an Applikationssicherheit bieten.
Setzt man die für die Abscheidung einer geschlossenen zweiten Schicht mindestens notwendige Rußpigmentkonzentration $c_{GS}$ zu der Rußpigmentkonzentration,ab der Warzenbildung zu beobachten ist ($C_W$), ins Verhältnis, so erhält man ein Maß für die Applikationssicherheit:

| Bindemittel | Pigmentierung | $\frac{c_{GS}}{c_W}$ |
|---|---|---|
| C | $R_1$ | > 0,647 |
| C | $R_2$ | 0,551 |
| C | $R_3$ | 0,472 |
| C | $R_4$ | 0,630 |
| C | $R_5$ | 0,294 |

Vorstehender Tabelle kann entnommen werden, daß bei Pigmentierungen mit $R_5$ schon 29,4 % der Rußmenge, bei der Warzenbildung beobachtet wird, genügen, um eine elektrophoretisch überbeschichtbare Lackschicht zu erhalten. Der große Spielraum zwischen den Grenzkonzentrationen $c_{GS}$ und $c_W$ bietet somit ein hohes Maß an Applikationssicherheit, das von den übrigen Leitrussen $R_2$, $R_3$ und $R_4$ - die zudem in höheren Konzentrationen eingesetzt werden müssen - nicht annähernd erreicht wird.

## Patentansprüche

1. Kationische aminmodifizierte Epoxidharze enthaltende kathcdisch abscheidbare mit elektrisch leitfähigem Ruß pigmentierte wäßrige Elektrotauchlacke, die nach der Abscheidung und Vernetzung elektrophoretisch überbeschichtbare Lackschichten liefern, dadurch gekennzeichnet, daß sie als elektrisch leitfähigen Ruß einen Ruß mit einer Jodabsorption von 870 - 930 mg/g, einer spezifischen Oberfläche ($BET/N_2$) von 850 - 1000 $m^2/g$, einem Porenvolumen (DBP) von 330 - 390 ml/100 g und einer durchschnittlichen Teilchengröße von 25 bis 35 nm in einer Menge von 1,5 bis 5,1 Gew.% - bezogen auf den Gesamtfestkörper - enthalten.

2. Wäßrige Elektrctauchlacke nach Anspruch 1, dadurch gekennzeichnet, daß sie als elektrisch leitfähigen Ruß einen Ruß mit einer Jodabsorption von 900 mg/g, einer spezifischen Oberfläche ($BET/N_2$) von 950 $m^2/g$, einem Porenvolumen (DBP) von 360 ml/100 g und einer durchschnittlichen Teilchengröße von 30 nm in einer Menge von 1,5 bis 5,1 Gew. % - bezogen auf den Gesamtfestkörper - enthalten.

3. Verfahren zum Herstellen eines Mehrschichtüberzuges, bei dem auf ein elektrisch leitendes Substrat ein ein kationisches aminmodifiziertes Epoxidharz enthaltender kathodisch abscheidbarer mit elektrisch leitfähigem Ruß pigmentierter wäßriger Elektrotauchlack elektrophoretisch aufgebracht, vernetzt und erneut elektrophoretisch überbeschichtet wird, dadurch gekennzeichnet, daß der zur Herstellung der Basisschicht verwendete Elektrotauchlack als elektrisch leitfähigen Ruß einen Ruß mit einer Jodabsorption von 870 - 930 mg/g,einer spezifischen Oberfläche ($BET/N_2$) von 850 - 1000 $m^2/g$, einem Porenvolumen (DBP) von 330 - 390 ml/100 g, einer durchschnittlichen Teilchengröße von 25 bis 35 nm in einer Menge von 1,5 bis 5,1 Gew. % - bezogen auf den Gesamtfestkörper - enthält.

4. Verfahren nach Anspruch 3, dadurch gekennzeichnet, daß der zur Herstellung der Basisschicht verwendete Elektrotauchlack als elektrisch leitfähigen Ruß einen Ruß mit einer Jodabsorption von 900 mg/g, einer spezifischen Oberfläche ($BET/N_2$) von 950 $m^2/g$, einem Porenvolumen (DBP) von 360 ml/100 g und einer durchschnittlichen Teilchengröße von 30 nm in einer Menge von 1,5 bis 5,1 Gew. % - bezogen auf den Gesamtfestkörper - enthält.

## Claims

1. A cathodically depositable aqueous electropaint which contains a cationic amine-modified epoxy resin and is pigmented with electroconductive carbon black and which, on deposition and crosslinking, provides an electrophoretically overcoatable coating, which contains as electroconductive carbon black a carbon black having an iodine absorption of 870 - 930 mg/g, a specific surface area ($BET/N_2$) of 850 - 1,000 $m^2/g$, a pore volume (DBP) of 330 - 390 ml/100 g and an average particle size of 25 to 35 nm in an amount of 1.5 to 5.1% by weight - based on total solids.

2. An aqueous electropaint as claimed in claim 1, which contains as electroconductive carbon black a carbon black having an iodine absorption of 900 mg/g, a specific surface area ($BET/N_2$) of 950 $m^2/g$, a pore volume (DBP) of 360 ml/100 g and an average particle size of 30 nm in an amount of 1.5 to 5.1% by weight - based on total solids.

3. A process for preparing a multibuild coating by electrophoretically applying to an electroconductive substrate a cathodically depositable aqueous electropaint which contains a cationic amine-modified epoxy resin and is pigmented with electrooonductive carbon black, crosslinking and again electrophoretically overcoating, wherein the electropaint used for preparing the base coat contains as electroconductive carbon black a carbon black having an iodine absorption of 870 - 930 mg/g, a specific surface area ($BET/N_2$) of 850 - 1,000 $m^2/g$, a pore volume (DBP) of 330 - 390 ml/100 g and an average particle size of 25 to 35 nm in an amount of 1.5 to 5.1% by weight - based on total solids.

4. A process as claimed in claim 3, wherein the electropaint used for preparing the base coat contains as electroconductive carbon black a carbon black having an iodine absorption of 900 mg/g, a specific surface area ($BET/N_2$) of 950 $m^2/g$, a pore volume (DBP) of 360 ml/ 100 g and an average particle size of 30 nm in an amount of 1.5 to 5.1% by weight - based on total solids.

## Revendications

1. Laques aqueuses d'électrodéposition, contenant des résines époxydiques cationiques modifiées par une amine, susceptibles d'être déposées à la cathode, pigmentées par du noir de carbone conducteur de l'électricité, qui fournissent, après le dépôt et la réticulation, des couches de laques susceptibles d'être recouvertes par un revêtement électrophorétique, caractérisées par le fait qu'elles contiennent, comme noir de carbone conducteur de l'électricité, un noir de carbone présentant une absorption d'iode de 870-930 mg/g, une surface spécifique (BET/$N_2$) de 850-1000 $m^2$/g, un volume de pores (DBP) de 330-390 ml/100 g et une dimension moyenne de particule de 25 à 35 nm, dans une quantité de 1,5 à 5,1% en poids - par rapport à la teneur totale en matières solides.

2. Laques aqueuses d'électrodéposition selon la revendication 1, caractérisées par le fait qu'elles contiennent, comme noir de carbone conducteur de l'électricité, un noir de carbone présentant une absorption d'iode de 900 mg/g, une surface spécifique (BET/$N_2$) de 950 $m^2$/g, un volume de pores (DBP) de 360 ml/100 g et une dimension moyenne de particule de 30 nm, dans une quantité de 1,5 à 5,1% en poids - par rapport à la teneur totale en matières solides.

3. Procédé de fabrication d'un revêtement à plusieurs couches, suivant lequel, sur un substrat conducteur de l'électricité, une laque aqueuse d'électrodéposition, contenant une résine époxydique cationique modifiée par une amine, susceptible d'être déposée à la cathode, pigmentée par du noir de carbone conducteur de l'électricité, est appliquée par voie électrophorétique, réticulée et à nouveau recouverte d'un revêtement par voie électrophorétique, caractérisé par le fait que la laque d'électrodéposition utilisée pour la fabrication de la couche de base contient, comme noir de carbone conducteur de l'électricité, un noir de carbone présentant une absorption d'iode de 870-930 mg/g, une surface spécifique (BET/$N_2$) de 850-1000 $m^2$/g, un volume de pores (DBP) de 330-390 ml/100 g, une dimension moyenne de particule de 25 à 35 nm, dans une quantité de 1,5 à 5,1% en poids - par rapport à la teneur totale en matière solides.

4. Procédé selon la revendication 3, caractérisé par le fait que la laque d'électrodéposition utilisée pour la fabrication de la couche de base contient, comme noir de carbone conducteur de l'électricité, un noir de carbone présentant une absorption d'iode de 900 mg/g, une surface spécifique (BET/$N_2$) de 950 $m^2$/g, un volume de pores (DBP) de 360 ml/100 g et une dimension moyenne de particule de 30 nm, dans une quantité de 1,5 à 5,1% en poids - par rapport à la teneur totale en matières solides.